# EUROPEAN PATENT APPLICATION

(11) **EP 4 224 304 A1**
(43) Date of publication of application: **09.08.2023**
(21) Application number: 22155627.7
(22) Date of filing: 08.02.2022
(51) Int. Cl.: G06F 3/12, G03G 15/00

(54) **METHOD FOR PROCESSING A PRINT JOB BY A PRINTER AND A FINISHER**

(71) Applicant: Canon Production Printing Holding B.V., 5914 HH Venlo (NL)
(72) Inventor: GERRITS, Antonius M., Venlo (NL); BRANKAERT, Xavier C.M., Venlo (NL); BAIJENS, Joris J.M., Venlo (NL)
(74) Representative: Canon Production Printing IP Department

(57) **Abstract**

The invention relates to a method for processing a print job on a recording medium by a printing system and at least one finishing system. The printing system comprises a print controller, a user interface and at least one output location. The at least one finishing system is an in-line or on-line finishing system and comprises at least one output location. The method comprises the steps of the print controller receiving the print job comprising a plurality of print settings and finishing settings, the print controller determining at least one output location for the recording medium of the print job based on the finishing settings of the print job, the at least one output location being an output location of the printing system or an output location of one of the at least one finishing system, the print controller creating for each determined output location a test print corresponding to the determined output location, and processing each created test print by the corresponding printing and finishing systems.

## Description

### Field of the invention

The present invention relates to a method for processing a print job on a recording medium by a printing system and at least one finishing system resulting in an end product, the printing system comprising a print controller, a user interface and at least one output location, the at least one finishing system being an in-line or on-line finishing system and comprising at least one output location, the printing system and the at least one finishing system being physically connected, the method comprising the step of the print controller receiving the print job comprising a plurality of print settings and finishing settings.

The present invention further relates to a printing system configured to execute the method according to the invention.

Hereinafter a printing system may also be referred to as a printer. Hereinafter a finishing system may also be referred to as a finisher.

Hereinafter a test print is at least one page of the print job which is needed for test purposes like image quality inspection, finishing control, sampling, etc. A test print may also be referred to as a sample sheet, a check print and an inspection sheet.

The finishing system according to the invention is an in-line finisher or an on-line finisher. The finishing system may be used to coat, to punch, to perforate, to glue, to bind, to stitch, to staple, to laminate, to cut, to trim, to fold, to stack, to inspect print quality, etc. Therefore the finishing system may be a stacker, an inspection unit for inspecting the print of finish quality of the print jobs, or any other finisher for sheets or stacks of sheets. The printing system and the finishing system may communicate with each other via a digital connection. The digital connection may be a dedicated connection by means of a DFD protocol, or a general connection via a customer network. In principle a network link and protocol over which the communication runs is arbitrarily implementable.

The printing system and the finishing system are devices to print and finish respectively. An input of a device is defined as a resource which is suitable to put in the device for production of a document by the device. The input may for example be a number of loose sheets, a stack of loose sheets, a number of pre-processed sheets, a number of bound sheets like a booklet or a book, one or more cover sheets, a roll of media, etc.

An output of a printing or finishing system is defined as a deliverable which is output by the printing or finishing system. The output may for example be a number of at least one loose printed sheet, a stack of loose printed sheets, a number of bound sheets like a booklet or a book, one or more cover sheets, a number of finished sheets like a number of trimmed sheets, a number of cut sheets, a number of perforated sheets, a number of laminated sheets, a number of cut and stacked sheets, combinations of the here-before mentioned sheets, etc.

### Background of the invention

A printing system is known to receive a print job comprising print data, i.e. a customer document, and a plurality of print settings and finishing settings.

For a print job test prints may be desired. Test prints, such as sample sheets may play an important role in quality assurance during and after production of documents for production printing customers. A test print may be a sample sheet or a check print. The test print may be processed in a separate test print job or during the actual production of the print job.

Nowadays an operator of a printing system can set on system level in which output location sample sheets of a test print will be deposited. Therefore the setting for the output location is fixed for all print jobs. This is rather cumbersome when the printing system is physically connected with one or more finishing systems which each have one or more output locations and provide different finishing functionalities.

It is an objective of the present invention to provide a method for processing a print job that needs finishing by at least one the finishing system and has to be tested before the actual production in order to mitigate the operator problems mentioned here-above.

Another objective is to provide test or check print sheets that are actually finished with the same functionality as the actual print job production.

### Summary of the invention

According to the present invention the objective is achieved by the method according to the invention wherein the method comprises the steps of the print controller determining at least one output location for the recording medium of the print job based on the finishing settings of the print job, the at least one output location being an output location of the printing system or an output location of one of the at least one finishing system, the print controller creating for each determined output location at least one test print to be delivered to the determined output location and corresponding to the print job, and processing each created test print by the corresponding printing and finishing systems and delivering the processed test print to the corresponding determined output location.

By doing so, the printing system allows and can determine per job that intermediate check prints or sample sheets for a print job are ejected to an output location that matches the finishing needs of the print job or other needs, for example print quality inspection. The method not only allows for manual visual print quality checks but also for intermediate results regarding finishing, depending on the finishing settings of the print job, and automated print quality inspections that match the print inspection needs of the print job, during printing of the print job itself without having to stop printing the print job. An operator can indicate whether check prints are only done for a fixed output location, e.g. for print quality inspection, or including one finishing step or must get at least one or some particular finishing step(s) done if the print job needs said finishing. The operator can now also indicate that the check print must be as close as possible to a finishing level of the accompanying job. The printing system will then assure that any intermediate check print asked will be deposited in an output location that has a correct level of finishing included corresponding to the finishing settings of the print job.

According to an embodiment the step of determining the at least one output location comprises the sub-steps of analyzing the finishing settings of the print job, determining the printing and finishing systems which are involved in processing the print job based on the printing and finishing settings and establishing at least one output location of the determined printing and finishing systems.

According to an embodiment the step of determining the at least one output location comprises the sub-step of listing the at least one established output location of the printing and finishing systems in a list, and by user input via the user interface selecting for each test print from the list at least one output location.

According to an embodiment the step of determining the at least one output location comprises the sub-step of listing the at least one established output location in a sequence order which matches with a sequence order of the printing and finishing systems when processing the print job, and the step of processing each created test print by the corresponding printing and finishing systems takes into account the sequence order of the listing sub-step.

According to an embodiment the method comprises the step of selecting from the at least one created test print at least one test print to be processed and limiting the step of processing each created test print by the corresponding printing and finishing systems to the at least one selected test print.

According to an embodiment the at least determined output location comprises an original output location derived from a finishing setting of the print job which sets an output location of the print job.

According to an embodiment the at least one finishing system is a stacker, an inspection unit, a finisher for sheets or a finisher for stacks of sheets.

According to an embodiment the test print comprises at least one sheet taken by at least one specified page range by means of user input via the user interface of the printing system.

The present invention also relates to a printing system for printing a print job on a recording medium by a printing system and at least one finishing system resulting in an end product, the printing system comprising a print controller, a user interface and at least one output location and being connected to at least one finishing system which is an in-line or on-line finishing system and comprises at least one output location, the printing system and the at least one finishing system being physically connected, wherein the print controller is configured to perform the steps of the method according to the invention.

According to an embodiment the user interface comprises a system settings window comprising a system setting for input of a fixed output location for test prints of the print job, wherein the system settings window comprises at least one system setting for automatically setting per print job at least one output location of the at least one test print according to the method of the invention.

According to an embodiment the at least one system setting for automatically setting the at least one output location of the at least one test print per print job equals a plurality of system settings for automatically setting per print job the at least one output location of the at least one test print, wherein for each of the plurality of system settings a resemblance on finishing level of the test print with an end result of the print job is different.

The present invention also relates to a non-transitory software medium comprising executable program code configured to, when executed on a print controller of a printing system according to any one of the claims 9 - 11, enable the print controller to perform the steps of the method according to any of the claims 1 - 8.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### Brief description of the drawings

- Fig. 1: shows a first schematic view of a printing system according to an embodiment of the present invention and at least one finishing system according to an embodiment the present invention.
- Fig. 2: shows a second schematic view of a printing system and finishing systems according to an embodiment of the present invention.
- Fig. 3: shows a first user interface window of the printing system according to an embodiment of the present invention.
- Fig. 4: shows a second user interface window of the printing system according to an embodiment of the present invention.
- Fig. 5: is a flow diagram of an embodiment of the method according to the present invention.

### Detailed description of the embodiments

The present invention will now be described with reference to the accompanying drawings, wherein the same or similar elements are identified with the same reference numerals throughout the several views.

The following table introduces device definitions for in-line finishers, on-line finishers, off-line finishers and near-line finishers.

| Integrated into the printing production route? | | **Settings Flow** | |
|---|---|---|---|
| | | ***YES*** | ***NO*** |
| **Paper flow** | ***YES*** | IN-line | ON-line |
| | ***NO*** | NEAR-line | OFF-line |

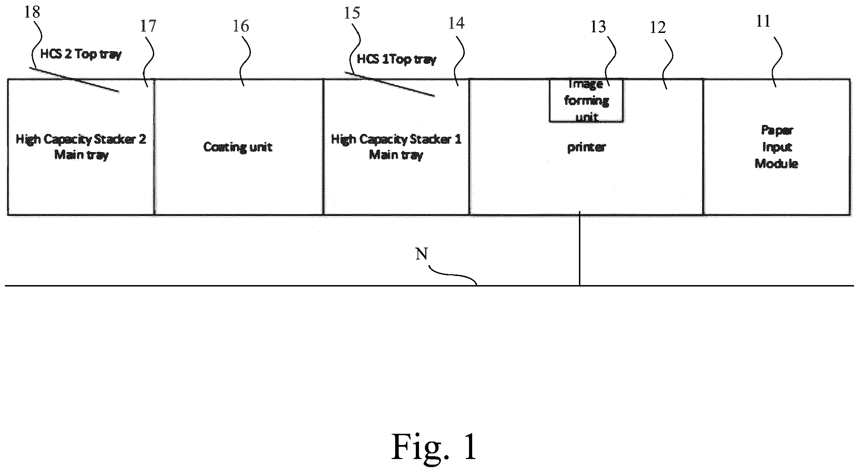

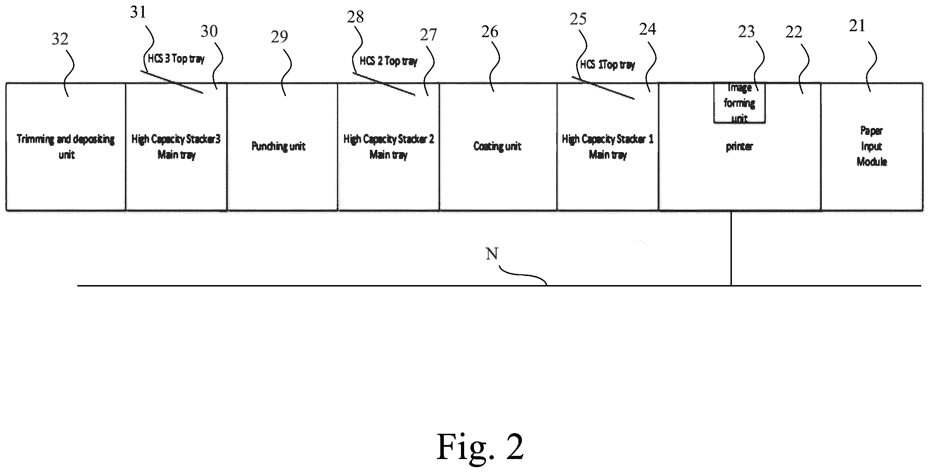

An in-line device and an on-line device are subject of the present invention. The finishing systems in Fig. 1 and Fig. 2 are examples of in-line finisher or on-line finishers.

FIG. 1 is an example of a simple configuration of a printing system 12 and a finishing system 16 to which the present invention can be applied. The printing system 12 is connected to a network N for receiving print jobs in memory of the print controller of the printing system 12. Recording medium needed for the print job according to the print job settings is retrieved from an paper input module 11 which is physically connected to the printing system 12. The printing system 12 comprises an image forming unit 13 for marking the recording medium according to the print job settings with marking material like ink or toner according to image data of the print job. The printed output of the printing system 12 is delivered to a first physically connected high capacity stacker 14, abbreviated HCS 14. The first high capacity stacker 14 comprises a first output location called "Main tray" and a second output location 15 called "HCS 1 Top tray". The first high capacity stacker 14 is physically connected to a coating unit 16 for coating the printed sheets which are transferred from the first high capacity stacker 14. The coating unit 16 is physically connected to a second high capacity stacker 17, abbreviated HCS 17. The second high capacity stacker 17 comprises a third output location called "Main tray" and a fourth output location 18 called "HCS 2 Top tray".

According to the finishing settings of the print job, the print job needs coating or not. Depending on the finishing settings of the print job, the printing system determines in which output location intermediate check prints are going to be deposited. When no coating is needed according to the finishing settings of the print job, the intermediate check prints are deposited in the second output location 15 called "HCS 1 Top tray". When coating is needed according to the finishing settings of the print job, the intermediate check prints are deposited in the fourth output location 18 called "HCS 2 Top tray".

FIG. 2 is an extended configuration of a printing system 22 and three finishing systems 26, 29, 32 to which the present invention can be applied. The printing system 22 is connected to a network N for receiving print jobs in memory of the print controller of the printing system 22. Recording medium needed for the print job according to the print job settings is retrieved from an paper input module 21 which is physically connected to the printing system 22. The printing system 22 comprises an image forming unit 23 for marking the recording medium according to the print job settings with marking material like ink or toner according to image data of the print job. The printed output of the printing system 22 is delivered to a first physically connected high capacity stacker 24, abbreviated HCS 24. The first high capacity stacker 24 comprises a first output location called "Main tray" and a second output location 25 called "HCS 1 Top tray". The first high capacity stacker 24 is physically connected to a coating unit 26 for coating the printed sheets which are transferred from the first high capacity stacker 24. The coating unit 26 is physically connected to a second high capacity stacker 27, abbreviated HCS 27. The second high capacity stacker 27 comprises a third output location called "Main tray" and a fourth output location 28 called "HCS 2 Top tray". The second high capacity stacker 27 is physically connected to a punching unit 29 for punching the coated recording medium. The punching unit 29 is physically connected to a third high capacity stacker 30, abbreviated HCS 30. The third high capacity stacker 30 comprises a fifth output location called "Main tray" and a sixth output location 31 called "HCS 3 Top tray". The third high capacity stacker 30 is physically connected to a trimming and depositing unit 32 for trimming and depositing the punched sheets.

For the extended configuration of the printing system as shown in Fig. 2, the operator may indicate that at least coating must be done for sample sheets of print jobs that need at least coating. For a print job that needs both coating by the coating unit 26 and punching by the punching unit 29 sheets of recording medium are intended to be deposited in the third HCS 30, but outcome of intermediate check prints of test job(s) would be for example in the fourth output location 28 called "HCS 2 Top tray". The operator may also indicate in the extended configuration of Fig. 2 that intermediate check prints must be done as close to the finishing level of the print jobs. For a print job that needs both coating and punching having a deposit in the third HCS 30, the respective outcome of the intermediate check prints would be in the sixth output location 31 called "HCS 3 Top tray". Print jobs that need punching and trimming will also be deposited in the sixth output location 31 as the trimming and depositing unit 32 does not have a top tray that allows deposition which is separate from the main output of the print job in the trimming and depositing unit 32.

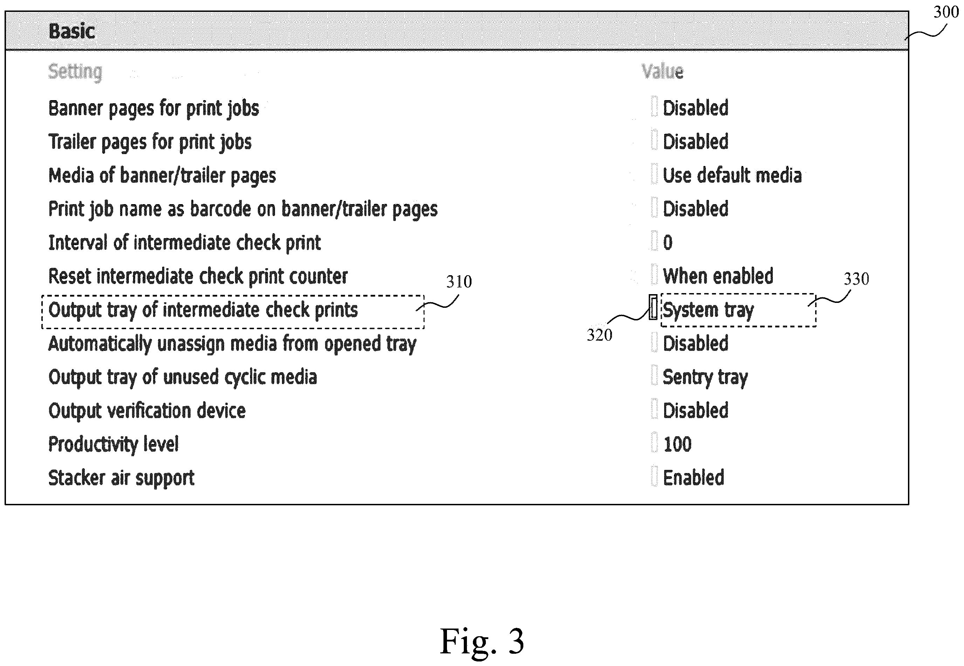

Fig. 3 shows a first user interface window 300 of the printing system according to an embodiment of the present invention. System settings and values of the system setting are listed. The values of the system settings can be edited by activating a user operable item 320. A system setting 310 for setting an output location for test prints is shown and named "Output tray for intermediate check prints". A value of the system setting 310 is for example a value 330 named "System tray" which is a fixed output location for the printing system.

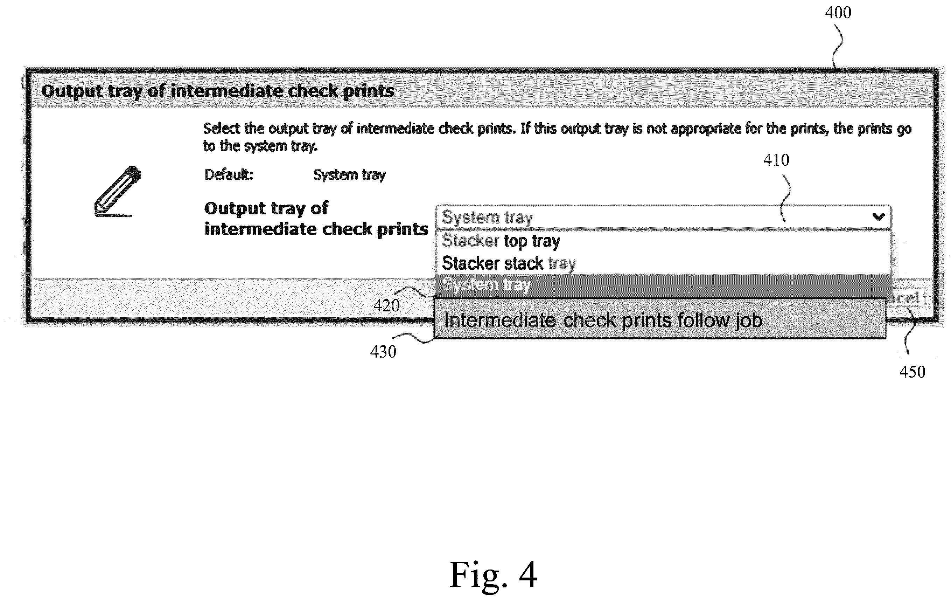

Fig. 4 shows a second user interface window 400 of the printing system according to an embodiment of the present invention. The second user interface window 400 appears when activating the user operable item 320 for system setting 310. The system setting 310 is used to set the output location used for intermediate check prints. The value of the system setting 310 may be selected from a drop down menu 410. A default setting value may be a system setting value 420 named "System tray" which is fixed and in most cases an upper output tray closest to the printer. According to the present invention the system setting 310 can also be set to other system setting values like "Stacker top tray" or "Stacker stack tray". According to the present invention the system setting 310 can be set to a system setting value 430 named "Intermediate check prints follow job". The second user interface window 400 is closed in order to return to user interface window 300 by activating an OK button (not shown but on the left side of a cancel button 450) or the cancel button 450. When activating the OK button a selected value for the system setting 310 named "Output tray for intermediate check prints" will be saved in memory of the print controller of the printing system. When activating the cancel button 450 the value of the system setting 310 named "Output tray for intermediate check prints" will not be changed. By introducing the value option 430 for system setting 310 sample sheets of test prints are allowed to not only resemble a print job on print output of the printing system but also to resemble the print job on finishing level.

According to an embodiment an amount of resemblance is customizable.

According to a first further embodiment the amount of resemblance is customizable by indicating minimum requirements for resemblance via different system setting values like system setting value 430. For example, such different setting values may be a first system setting value named "intermediate check prints follow job as much as possible" which equals the system setting value 430, a second system setting value named "intermediate check prints follow job at least up to print inspection" (not shown), a third system setting value named "intermediate check prints follow job at least up to one finishing action after printing" (not shown), a fourth system setting value named "intermediate check prints follow job at least up to two finishing actions after printing" (not shown), a fifth system setting value named "intermediate check prints follow job at least up to coating" (not shown), etc.

According to a second further embodiment the amount of resemblance is customizable by changing the original print and finishing settings of the print job corresponding to requirements of the test print(s) before processing the test print.

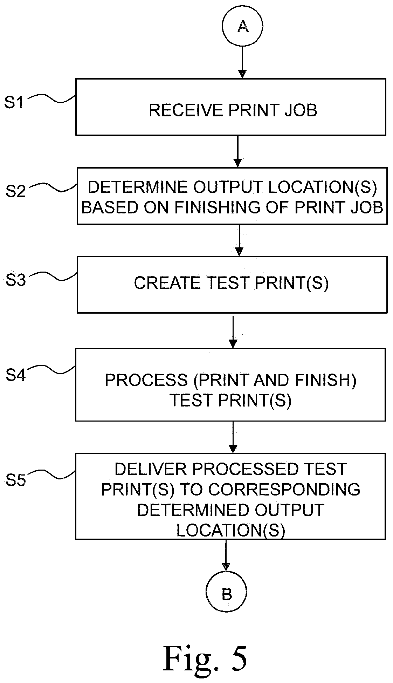

Fig. 5 is a flow diagram of an embodiment of the method according to the present invention.

The method starts in a start point A which leads to a first step S1.

In the first step S1 the print controller receives the print job comprising a plurality of print settings and finishing settings.

In a second step S2 the print controller determines at least one output location for the recording medium of the print job based on the finishing settings of the print job. The at least one output location is an output location of the printing system or an output location of one of the at least one finishing system.

In a third step S3 the print controller creates for each determined output location at least one test print corresponding to the determined output location. The creation of the test print by the print controller comprises a definition of the test print with respect to print and finishing settings and image data. The image data may be image data of at least one page of the print job. Via the user interface windows 300 and 400 shown in respectively Fig. 3 and Fig. 4, the user is able to set the output location for test prints that have to follow the flow of the recording medium through the printing system and the finishing systems which systems are derivable from the print and finishing settings of the print job. When selecting the output location setting value 430 as shown the user interface windows 300 and 400 in Fig. 3 and Fig. 4 respectively the output location is not fixed but may vary per print job. In that case the test prints are based on minimum requirements on resemblance for the test prints.

In a fourth step S4 each created test print is processed by the corresponding printing and finishing systems. According to an alternative embodiment the method comprises the step of selecting from the at least one created test print at least one test print to be processed and limiting the step of processing each created test print by the corresponding printing and finishing systems to the at least one selected test print. The processing of the created test print comprises the printing and finishing of the created test print.

In a fifth step S5 each processed test print is delivered to the corresponding output location determined for example by system setting value 430.

The method ends in an end point B.

The skilled person will recognise that other embodiments are possible within the scope of the appended claims.

## Claims

1. A method for processing a print job on a recording medium by a printing system and at least one finishing system resulting in an end product, the printing system comprising a print controller, a user interface and at least one output location, the at least one finishing system being an in-line or on-line finishing system and comprising at least one output location, the printing system and the at least one finishing system being physically connected, the method comprising the steps of
- the print controller receiving the print job comprising a plurality of print settings and finishing settings,
- the print controller determining at least one output location for the recording medium of the print job based on the finishing settings of the print job, the at least one output location being an output location of the printing system or an output location of one of the at least one finishing system,
- the print controller creating for each determined output location at least one test print to be delivered to the determined output location and corresponding to the print job, and
- processing each created test print by the corresponding printing and finishing systems and delivering the processed test print to the corresponding determined output location.

2. A method according to claim 1, wherein the step of determining the at least one output location comprises the sub-steps of analyzing the finishing settings of the print job, determining the printing and finishing systems which are involved in processing the print job based on the printing and finishing settings and establishing at least one output location of the determined printing and finishing systems.

3. A method according to claim 2, wherein the step of determining the at least one output location comprises the sub-step of listing the at least one established output location of the printing and finishing systems in a list, and by user input via the user interface selecting for each test print from the list at least one output location.

4. A method according to claim 2 or 3, wherein the step of determining the at least one output location comprises the sub-step of listing the at least one established output location in a sequence order which matches with a sequence order of the printing and finishing systems when processing the print job, and the step of processing each created test print by the corresponding printing and finishing systems takes into account the sequence order of the listing sub-step.

5. A method according to any one of the preceding claims, wherein the method comprises the step of selecting from the at least one created test print at least one test print to be processed and limiting the step of processing each created test print by the corresponding printing and finishing systems to the at least one selected test print.

6. A method according to any one of the preceding claims, wherein the at least determined output location comprises an original output location derived from a finishing setting of the print job which sets an output location of the print job.

7. A method according to any one of the preceding claims, wherein the at least one finishing system is a stacker, an inspection unit, a finisher for sheets or a finisher for stacks of sheets.

8. A method according to any one of the preceding claims, wherein the test print comprises at least one sheet taken by at least one specified page range by means of user input via the user interface of the printing system.

9. A printing system for printing a print job on a recording medium by a printing system and at least one finishing system resulting in an end product, the printing system comprising a print controller, a user interface and at least one output location and being connected to at least one finishing system which is an in-line or on-line finishing system and comprises at least one output location, the printing system and the at least one finishing system being physically connected, wherein the print controller is configured to perform the steps of the method according to any one of claims 1-8.

10. A printing system according to claim 9, wherein the user interface comprises a system settings window comprising a system setting for input of a fixed output location for test prints of the print job, wherein the system settings window comprises at least one system setting for automatically setting per print job at least one output location of the at least one test print according to the method of any one of claims 1-8.

11. A printing system according to claim 10, wherein the at least one system setting for automatically setting the at least one output location of the at least one test print per print job equals a plurality of system settings for automatically setting per print job the at least one output location of the at least one test print, wherein for each of the plurality of system settings a resemblance on finishing level of the test print with an end result of the print job is different.

12. A non-transitory software medium comprising executable program code configured to, when executed on a print controller of a printing system according to any one of the claims 9 - 11, enable the print controller to perform the steps of the method according to any of the claims 1 - 8.
